# EUROPÄISCHE PATENTSCHRIFT

(11) **EP 1 117 953 B1**
(45) Veröffentlichungstag und Bekanntmachung des Hinweises auf die Patenterteilung: **03.04.2002**
(21) Anmeldenummer: 99969775.8
(22) Anmeldetag: 23.09.1999
(51) Int. Cl.: F16H 61/12, F16H 63/50

(54) **VERFAHREN ZUR REDUZIERUNG DER THERMISCHEN BELASTUNG EINES AUTOMATGETRIEBES FÜR EIN KRAFTFAHRZEUG IN EINEM NOTFAHRBETRIEB**
METHOD FOR REDUCING THE THERMAL LOAD ON AN AUTOMATIC TRANSMISSION OF A MOTOR VEHICLE IN EMERGENCY OPERATING MODE
PROCEDE DE REDUCTION DE LA CHARGE THERMIQUE D'UNE BOITE DE VITESSES AUTOMATIQUE D'UN VEHICULE AUTOMOBILE EN MODE DE SECOURS

(30) Priorität: 29.09.1998 DE 19844623
(43) Veröffentlichungstag der Anmeldung: 25.07.2001
(73) Patentinhaber: ZF Batavia, L.L.C., Batavia, OH 45103 (US)
(72) Erfinder: GIERLING, Armin, D-88085 Langenargen (DE); SCHMID, Wolf-Dieter, Batavia, OH 45103 (US); FISCHER, Johannes, D-88045 Friedrichshafen (DE)
(74) Vertreter: Zietlow, Karl-Peter
(86) Internationale Anmeldenummer: EP9907074
(87) Internationale Veröffentlichungsnummer: WO0019131

(56) Entgegenhaltungen:
- WO-A-93/13340
- DE-A- 4 110 105
- DE-A- 4 436 506
- DE-A- 19 807 057

## Beschreibung

Die Erfindung betrifft ein Verfahren zur Reduzierung der thermischen Belastung eines Automatgetriebes für ein Kraftfahrzeug in einem Notfahrbetrieb nach der im Oberbegriff des Patentanspruches 1 näher definierten Art.

Die Nutzung der Intelligenz in der Elektronik findet bei Kraftfahrzeugen mit modernen Automatgetrieben ihren Ausdruck im Einsatz einer Elektronischen Getriebesteuerung (EGS), mit der bekanntlich kundenrelevante Kriterien wie z. B. der Fahrkomfort und Fahrbarkeit als auch sicherheitsrelevante Kriterien in hohem Maße erfüllt werden. Zur situationsabhängigen Gangwahl kommuniziert die Elektronische Getriebesteuerung stetig mit weiteren Steuergeräten und Rechnern verschiedener Aggregate über einen CAN-(Controller Area Network)-Datenbus.

Für den Fall eines Defektes der Elektronischen Getriebesteuerung sind häufig Notfahrprogramme vorgesehen, welche so ausgelegt sind, daß ein Fahrzeug in einem Notfahrbetrieb in einem möglichst weiten Fahrbereich betrieben werden kann. Je nach Notlaufkonzept ist jedoch die Kühlung des Getriebes in einem solchen Notfahrzustand problematisch, da der Wärmeanfall im Notfahrbetrieb des Getriebes über das Kühlsystem des Fahrzeuges abgeführt werden muß und das Getriebe bei einem kompletten Ausfall der Elektronischen Getriebesteuerung keine eigenen Möglichkeiten hat, auf den Wärmehaushalt positiv einzuwirken.

Insbesondere trifft dies auf CVT-(Continuously Variable Transmission)-Automatgetriebe zu, welche einen Variator zur stufenlosen Einstellung eines Übersetzungsverhältnisses zwischen einer kürzest möglichen Übersetzung (LOW) und einer längsten möglichen Übersetzung (overdrive, OD) aufweisen.

In "ATZ Automobiltechnische Zeitschrift" 96 (1994) ist ein derartiges CVT-Getriebe mit einem ersten Kegelscheibenpaar auf einer Antriebswelle als Primärscheibensatz und mit einem zweiten Kegelscheibenpaar auf einer Abtriebswelle als Sekundärscheibensatz beschrieben. Jedes Kegelscheibenpaar besteht aus einer in axialer Richtung feststehenden ersten Scheibe und einer in axialer Richtung verschiebbaren zweiten Scheibe, welche je nach Zugehörigkeit zu dem Primär- oder Sekundärscheibensatz als Primärscheibe bzw. Sekundärscheibe bezeichnet wird. Zwischen den Kegelscheibenpaaren läuft ein Drehmomentübertragungsglied, welches z. B. ein die Kegelscheibenpaare umschlingendes Schubgliederband darstellt. Zur Verstellung der Primärscheibe oder der Sekundärscheibe werden diese mit einem Druckmedium aus einer Druckquelle beaufschlagt, wobei der jeweils in den Stellräumen von Primärscheibe und Sekundärscheibe anliegende Druck mit Hilfe einer Elektronischen Getriebesteuerung und einer elektrohydraulischen Druckversorgungseinrichtung eingestellt wird.

Aus der gattungsgemäßen DE 44 36 506 ist eine Einrichtung zum Steuern eines CVT-Getriebes bekannt, bei dem ein elektronisches Steuergerät über elektromagnetische Stellglieder und hydraulische Ventile das Druckniveau der insbesondere dynamisch nicht ausgeglichenen Stellräume von Primärscheibe und Sekundärscheibe bestimmt.

Für einen Ausfall des elektronischen Steuergerätes ist eine Notfahreinrichtung vorgesehen, die zwei Druckregelventile, zwei Druckreduzierventile und mindestens ein Notventil aufweist, wobei ein Primärventil und ein Sekundärventil ein konstantes statisches Druckverhältnis bzw. Kraftverhältnis zwischen Primärscheibe und Sekundärscheibe bei konstantem statischen Sekundärdruckniveau einstellt.

Über den Betrag dieses statischen Kraftverhältnisses und der dynamischen Kräfte an den dynamisch nicht druckausgeglichenen Scheiben kann festgelegt werden, wie groß die Übersetzungsänderung des CVT-Getriebes von einem Normalbetrieb zu dem Notfahrbetrieb ist. Der Notfahrbetrieb wird dabei als ein Zustand des CVT-Getriebes beschrieben, in dem eine Drehzahlregelung und eine Anpreßregelung der Sekundärscheibe unterbrochen ist.

Bei dieser bekannten Einrichtung variiert die Übersetzung des CVT-Getriebes in Abhängigkeit von dem abgegebenen Moment einer als Antriebseinheit vorgesehenen Brennkraftmaschine, wobei die variable Übersetzungsänderung im Notfahrbetrieb ein sicheres Anfahren am Berg und eine verbesserte Fahrbarkeit mit hoher Endgeschwindigkeit ermöglicht.

Als Eingangssignal an einem elektronischen Steuergerät liegt z. B. das Signal einer Laststellung der Antriebseinheit wie die Drosselklappenstellung im Falle einer Brennkraftmaschine, die Drehzahl der Getriebeeingangswelle, die Drehzahl der Abtriebswelle oder die Temperatur des Druckmediums vor. Aus dem Eingangssignal wird ein Betriebspunkt bestimmt und die dazugehörige Drehzahl der Getriebeeingangswelle oder die Übersetzung des CVT-Getriebes eingestellt. Wenn ein Fehler auftritt, geht das CVT-Getriebe in den Notfahrbetrieb über, bei dem keine Drehzahlregelung und keine Anpreßdruckregelung der Sekundärscheibe mehr erfolgt.

Diese bekannte Lösung bietet zwar einen weiten möglichen Verstellbereich des Variators, jedoch ist es problematisch, daß der Anpreßdruck für die entsprechenden Scheiben nach den extremen Eckpunkten des Fahrbarkeitsbereiches ausgelegt werden muß. Einer dieser Eckpunkte ist die Sicherstellung der maximalen Anfahrleistung in dem kleinsten Gang, d. h. in oder nahe der LOW-Übersetzung. Für die Variatorübertragungsfähigkeit ist bei größter Übersetzung und hohem Antriebsmoment ein hoher Anpreßdruck an der Sekundärscheibe erforderlich. Aufgrund des konstanten statischen Druckverhältnisses zwischen Primärscheibe und Sekundärscheibe ist die an der Sekundärscheibe eingestellte statische Kraft, deren Betrag sich nach dem maximal zu übertragenden Antriebsmoment richtet, im gesamten Momentenbereich konstant.

Dies hat aber in weiten Fahrbereichen eine unerwünschte Überanpressung zur Folge, welche in nachteilhafter Weise zu einer hohen Betriebstemperatur in dem Variator mit erhöhtem Wirkungsgradverlust und Verschleiß des Variatorsystems führt.

Zur Reduzierung einer unzulässigen thermischen Belastung des Antriebsmotors eines Fahrzeugs ist in der WO 93/13340 ein Diagnosemodul bekanntgeworden, das als autarkes Steuergerät ausgebildet oder in ein anderes Steuergerät des Fahrzeugantriebsstranges integriert ist. Das Diagnosemodul ermittelt Fehlerzustände des Antriebsstranges über definierte Grenzwertbetrachtungen von Sensorsignalen oder Eingangssignalen, die von anderen Steuergeräten des Antriebsstranges geliefert werden. Je nach Fehlerschwere wird durch das Diagnosemodul die maximal zulässige Fahrzeuggeschwindigkeit mehr oder weniger begrenzt. In Verbindung mit einer Getriebesteuerung schlägt die WO 93/13340 vor, die Fahrzeuggeschwindigkeit durch die Gangauswahl des Getriebes zu begrenzen, wobei der jeweilige Gang der Getriebesteuerung von dem Diagnosemodul entsprechend der maximal zulässigen Fahrzeuggeschwindigkeit vorgegeben wird, was eine voll funktionsfähige Getriebesteuerung voraussetzt.

Der vorliegenden Erfindung liegt die Aufgabe zugrunde, ein Verfahren zur Reduzierung der thermischen Belastung eines Automatgetriebes für ein Kraftfahrzeug in einem Notfahrbetrieb zur Verfügung zu stellen, mit dem thermische und mechanische Schäden an dem Automatgetriebe durch Wärmeeinwirkung während des Notfahrbetriebs vermieden werden.

Erfindungsgemäß wird diese Aufgabe mit einem Verfahren nach dem Patentanspruch 1 gelöst.

Mit Hilfe des erfindungsgemäßen Verfahrens, bei dem im Notfahrbetrieb von der Digitalen Motorelektronik eine maximale Fahrzeuggeschwindigkeit v_max_not oder maximale Motordrehzahl n_mot_max_not vorgegeben wird, kann durch eine einfache Beschränkung des Betriebsbereichs erreicht werden, daß eine thermische Überbeanspruchung und ein wärmebedingter Verschleiß von Komponenten des Automatgetriebes sowie eine thermische Alterung des Getriebeöls verhindert wird.

Vorteilhafterweise werden bei dem erfindungsgemäßen Verfahren die notwendigen Schutzfunktionen für das Getriebe von der Motorelektronik wahrgenommen, wodurch ein wirksamer Überhitzungsschutz auch dann noch gewährleistet ist, wenn die Elektronische Getriebesteuerung komplett ausgefallen, elektronisch abgeschaltet oder elektrisch vom Fahrzeugbordnetz getrennt ist.

Die Begrenzung der Fahrgeschwindigkeit oder die ebenfalls eine Beschränkung der Fahrzeugghöchstgeschwindigkeit nach sich ziehende Begrenzung der Motordrehzahl durch ein Programmodul in der Motorelektronik stellt dabei eine einfache, aber wirkungsvolle Maßnahme sowohl in Verbindung mit einem elektrohydraulisch gesteuerten Stufenautomatgetriebe konventioneller Art als auch in Verbindung mit einem CVT-Getriebe dar.

Besonders vorteilhaft ist die Anwendung des erfindungsgemäßen Verfahrens bei CVT-Getrieben, da hier bei einer nur geringen Einschränkung der Betriebsbereitschaft der durch die Überanpressung bedingte Wärmeeintrag am Variator mit den entsprechenden Verschleißfolgen verhindert wird.

Darüber hinaus kann durch den Verzicht auf extreme Eckpunkte der Fahrbarkeit im Notfahrbetrieb die Dimensionierung des Getriebeölkühlers klein gehalten werden.

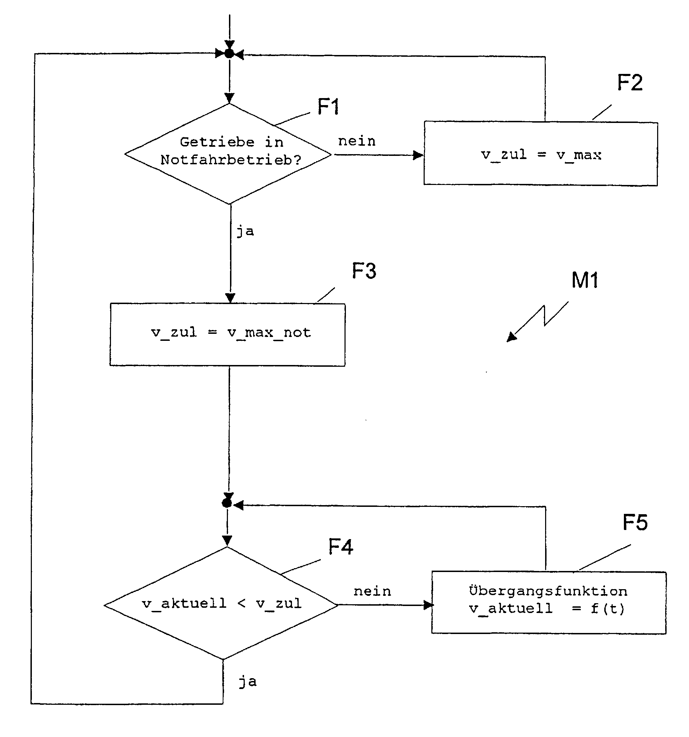

Weitere Vorteile und Weiterbildungen der Erfindung ergeben sich aus den Unteransprüchen und aus dem nachfolgend anhand der Zeichnung prinzipmäßig beschriebenen Ausführungsbeispiel.

Die Zeichnung zeigt in Grundzügen ein Ablaufschema eines erfindungsgemäßen Verfahrens zur Reduzierung der thermischen Belastung eines Automatgetriebes in einem Notfahrbetrieb.

Zur Durchführung des Verfahrens ist in einer nicht näher dargestellten Digitalen Motorelektronik eines Verbrennungsmotors, welche Signale über einen CAN-(Controller Area Network)-Datenbus mit einer Elektronischen Getriebesteuereinrichtung austauscht, ein von der Getriebesteuerung unabhängiges Programmodul M1 vorgesehen.

In dem Programmodul M1 wird zunächst in einer ersten Funktion F1 stetig geprüft, ob ein einen Normalbetrieb der Elektronischen Getriebesteuereinrichtung anzeigendes CAN-Signal an der Digitalen Motorelektronik eingeht. Wenn dies der Fall ist, wird von der Digitalen Motorelektronik in einer nachfolgenden Funktion F2 eine für das Fahrzeug vorgesehene Höchstgeschwindigkeit im Normalbetrieb v_max als zulässige Fahrzeuggeschwindigkeit v_zul ausgegeben.

Falls durch Fehlen des CAN-Signales, daß Normalbetrieb herrscht, erkannt wird, daß sich das Getriebe in Notfahrbetrieb befindet, wird in einer Funktion F3 von der Digitalen Motorelektronik die zulässige Fahrzeuggeschwindigkeit v_zul auf eine maximale Fahrzeuggeschwindigkeit für den Notfahrbetrieb v_max_not, wie z. B. 130 km/h, begrenzt.

Im Notfahrbetrieb wird in einer weiteren Unterscheidungsfunktion F4 geprüft, ob eine aktuelle Fahrzeuggeschwindigkeit v_aktuell kleiner oder gleich der maximalen Fahrzeuggeschwindigkeit für den Notfahrbetrieb v_max_not ist. Falls dies gegeben ist, wird zu dem Beginn des Programmoduls M1 zurückverzweigt.

Wenn jedoch die aktuelle Fahrzeuggeschwindigkeit v_aktuell größer als die zulässige maximale Fahrzeuggeschwindigkeit für den Notfahrbetrieb v_max_not bei deren Vorgabe ist, wird eine ebenfalls in der Digitalen Motorelektronik implementierte Übergangsfunktion F5 gestartet, die einen sicheren Übergang von der aktuellen Fahrzeuggeschwindigkeit v_aktuell in die zulässige maximale Fahrzeuggeschwindigkeit für den Notfahrbetrieb v_max_not gewährleistet.

Die zeitabhängige Übergangsfunktion F5 reduziert die aktuelle Fahrzeuggeschwindigkeit v_aktuell rampenförmig, d. h. langsam, so lange bis die zulässige maximale Fahrzeuggeschwindigkeit für den Notfahrbetrieb v_max_not erreicht ist. Dadurch wird eine abrupte Geschwindigkeitsänderung mit entsprechenden Fahrkomforteinbußen und sicherheitskritischen Fahrzeuginstabilitäten vermieden.

Der rampenartigen Übergangsfunktion F5 kann in einer weiteren Ausführung (nicht dargestellt) eine diskrete Zeitstufe vorgeschaltet sein, während der die aktuelle Fahrzeuggeschwindigkeit v_aktuell ohne Eingriff akzeptiert wird.

Die aktuelle Fahrzeuggeschwindigkeit v_aktuell wird während des Ablaufs der Übergangsfunktion F5 durch eine langsame Zurücknahme einer Einspritzmenge des Verbrennungsmotors oder durch eine langsame Zurücknahme eines Drosselklappenwinkels des mit einem elektronischen Gaspedal wirkverbundenen Verbrennungsmotors herabgesetzt.

Als Eingangssignal zur Beurteilung bzw. Bearbeitung der aktuellen Fahrzeuggeschwindigkeit v_aktuell dienen geschwindigkeitsproportionale Größen wie eine über einen Sensor eines Antiblockiersystems aufgenommene Raddrehzahl.

Im vorliegenden Ausführungsbeispiel wird das Verfahren zur Reduzierung der thermischen Belastung des Automatgetriebes im Notfahrbetrieb bei einem CVT-Automatgetriebe angewandt, welches einen Variator mit einem Primärscheibensatz, einem Sekundärscheibensatz und mit einem diese umschlingenden Schubgliederband als Drehmomentübertragungsglied aufweist. In dem Notfahrbetrieb wird eine Anpreßdruckregelung des Sekundärscheibensatzes unterbrochen und ein konstantes statisches Druckverhältnis zwischen dem Primärscheibensatz und dem Sekundärscheibensatz eingestellt.

Durch die Begrenzung der zulässigen Fahrzeuggeschwindigkeit v_zul im Notfahrbetrieb des Getriebes wird der Betriebsbereich des Fahrzeuges gezielt eingeschränkt, wobei die Betriebszustände des CVT-Automatgetriebes mit hoher Überanpressung an dem Variator verringert werden, ohne die Betriebsbereitschaft des Fahrzeuges deutlich einzuschränken.

Alternativ zu dem in der Zeichnung dargestellten Verfahren kann selbstverständlich anstelle der Beschränkung der zulässigen Fahrzeuggeschwindigkeit v_zul im Notfahrbetrieb des Getriebes eine Beschränkung der zulässigen Motordrehzahl, z. B. auf eine maximale Drehzahl von 4 000 rpm, durchgeführt werden, wobei die Fahrzeugverfügbarkeit allerdings stärker verringert wird. Das Verfahren selbst läuft analog zu dem dargestellten Verfahren ab.

Bei einem CVT-Automatgetriebe mit einer abtriebseitigen Anfahrkupplung kann der Variator infolge der direkten Kopplung des Motors mit dem Variator und dem sich motormomentenabhängig einstellenden Übersetzungsverhältnis bei nicht vorhandenem Kraftschluß durch Gasgeben nach einer Overdrive-Übersetzung verstellt werden. Die Sekundärscheibe des Variator ist dabei vor einer Überdrehzahl zu schützen.

Als weiterer nicht dargestellter Verfahrensschritt wird hierzu die aktuelle Motordrehzahl n_mot_aktuell sofort auf die zulässige maximale Motordrehzahl n_mot_max_not begrenzt, wenn der Notfahrbetrieb des Automatgetriebes in einer keinen Kraftschluß anfordernden Wählhebelposition, wie z. B. "P" und "N", erkannt wird.

Wenn die aktuelle Motordrehzahl n_mot_aktuell allerdings größer als die zulässige maximale Motordrehzahl n_mot_max_not ist und der Notfahrbetrieb des Automatgetriebes in einer einen Kraftschluß anfordernden Wählhebelposition erkannt wird, wird die aktuelle Motordrehzahl n_mot_aktuell in einer rampenartigen Übergangsfunktion in die zulässige maximale Motordrehzahl n_mot_max_not überführt.

In einem weiteren Ausführungsbeispiel kann das erfindungsgemäße Verfahren auch in Verbindung mit einem Wandlerautomatgetriebe vorgesehen sein, bei dem eine Wandlerkupplung im Notfahrbetrieb geöffnet ist. Hier verringert die Begrenzung der Fahrgeschwindigkeit bzw. der Motordrehzahl vorteilhafterweise den möglichen hohen Wärmeeintrag in das Automatgetriebe aufgrund der Wandlerverlustleistung.

Zur Verbesserung der Getriebekühlung wird schließlich in weiteren Ausführungen ein Motorlüfter gestartet, der bei einer applizierbaren, z. B. um 20 K abgesenkten Kühlmitteltemperatur C_Lüfter_ein_not betrieben wird. Alternativ hierzu kann der Motorlüfter selbstverständlich auch permanent laufen.

### Bezugszeichen

- F1: Unterscheidungsfunktion
- F2: Verarbeitungsfunktion
- F3: Verarbeitungsfunktion
- F4: Unterscheidungsfunktion
- F5: Übergangsfunktion
- M1: Programmodul

- v_aktuell: aktuelle Fahrzeuggeschwindigkeit
- v_max: zulässige maximale Fahrzeuggeschwindigkeit im Normalbetrieb
- v_max not: zulässige maximale Fahrzeuggeschwindigkeit im Notfahrbetrieb
- v_zul: zulässige Fahrzeuggeschwindigkeit

## Patentansprüche

1. Verfahren zur Reduzierung der thermischen Belastung eines Automatgetriebes für ein Kraftfahrzeug in einem Notfahrbetrieb, wobei das Automatgetriebe von einer Elektronischen Getriebesteuereinrichtung angesteuert wird, die im Normalfahrbetrieb stetig Signale mit einer Digitalen Motorelektronik eines Verbrennungsmotors austauscht, und wobei die Elektronische Getriebesteuereinrichtung im Notfahrbetrieb nicht funktionsfähig ist, **dadurch gekennzeichnet, daß** in dem Notfahrbetrieb von einem getriebeunabhängigen Programmodul (M1) der Digitalen Motorelektronik, welches unabhängig von der Getriebesteuereinrichtung arbeitet, eine zulässige maximale Fahrzeuggeschwindigkeit für den Notfahrbetrieb (v_max_not) oder eine zulässige maximale Motordrehzahl für den Notfahrbetrieb (n_mot_max_not) vorgegeben wird.

2. Verfahren nach Anspruch 1, **dadurch gekennzeichnet, daß** die zulässige maximale Fahrzeuggeschwindigkeit für den Notfahrbetrieb (v_max_not) oder die zulässige maximale Motordrehzahl für den Notfahrbetrieb (n_mot_max_not) vorgegeben wird, wenn von der Digitalen Motorelektronik der Notfahrbetrieb des Automatgetriebes aufgrund des Fehlens eines einen Normalbetrieb anzeigenden Signales der Elektronischen Getriebesteuereinrichtung erkannt wird.

3. Verfahren nach Anspruch 2, **dadurch gekennzeichnet, daß** das einen Normalbetrieb anzeigende Signal der Elektronischen Getriebesteuereinrichtung als CAM-Signal an der Digitalen Motorelektronik eingeht.

4. Verfahren nach einem der Ansprüche 1 bis 3, **dadurch gekennzeichnet, daß** eine Übergangsfunktion (F5) zur Überführung einer aktuellen Fahrzeuggeschwindigkeit (v_aktuell) in die zulässige maximale Fahrzeuggeschwindigkeit für den Notfahrbetrieb (v_max_not) bzw. einer aktuellen Motordrehzahl (n_mot_aktuell) in die zulässige maximale Motordrehzahl für den Notfahrbetrieb (n_mot_max_not) gestartet wird, wenn die aktuelle Fahrzeuggeschwindigkeit (v_aktuell) größer als die zulässige maximale Fahrzeuggeschwindigkeit für den Notfahrbetrieb (v_max_not) bzw. die aktuelle Motordrehzahl (n_mot_aktuell) größer als die zulässige maximale Motordrehzahl für den Notfahrbetrieb (n_mot_max_not) ist.

5. Verfahren nach Anspruch 4, **dadurch gekennzeichnet, daß** die aktuelle Fahrzeuggeschwindigkeit (v_aktuell) in die zulässige maximale Fahrzeuggeschwindigkeit für den Notfahrbetrieb (v_max_not) durch eine Zurücknahme einer Einspritzmenge des Verbrennungsmotors oder durch eine Zurücknahme eines Drosselklappenwinkels des mit einem elektronischen Gaspedal wirkverbundenen Verbrennungsmotors überführt wird.

6. Verfahren nach Anspruch 4 oder 5, **dadurch gekennzeichnet, daß** die aktuelle Fahrzeuggeschwindigkeit (v_aktuell) oder die aktuelle Motordrehzahl (n_mot_aktuell) in die zulässige maximale Fahrzeuggeschwindigkeit für den Notfahrbetrieb (v_max_not) oder in die zulässige maximale Motordrehzahl für den Notfahrbetrieb (n_mot_max_not) in der Übergangsfunktion (F5) rampenartig überführt wird.

7. Verfahren nach einem der Ansprüche 4 bis 6, **dadurch gekennzeichnet, daß** der Übergangsfunktion (F5) eine diskrete Zeitstufe vorgeschaltet ist, während der die aktuelle Fahrzeuggeschwindigkeit (v_aktuell) oder die aktuelle Motordrehzahl (n_mot_aktuell) nicht beeinflußt wird.

8. Verfahren nach einem der Ansprüche 1 bis 7, **dadurch gekennzeichnet, daß** von der Elektronischen Getriebesteuereinrichtung ein Variator des Automatgetriebes mit einem Primärscheibensatz, mit einem Sekundärscheibensatz und mit einem diese umschlingenden Drehmomentübertragungsglied angesteuert wird, wobei in dem Notfahrbetrieb eine Anpreßdruckregelung des Sekundärscheibensatzes unterbrochen wird und ein konstantes statisches Druckverhältnis zwischen dem Primärscheibensatz und dem Sekundärscheibensatz eingestellt wird.

9. Verfahren nach einem der Ansprüche 1 bis 8, **dadurch gekennzeichnet, daß** bei einem Automatgetriebe mit einer abtriebseitigen Anfahrkupplung die aktuelle Motordrehzahl (n_mot_aktuell) sofort auf die zulässige maximale Motordrehzahl (n_mot_max_not) begrenzt wird, wenn der Notfahrbetrieb des Automatgetriebes in einer keinen Kraftschluß anfordernden Wählhebelposition erkannt wird.

10. Verfahren nach einem der Ansprüche 1 bis 9, **dadurch gekennzeichnet, daß** bei einem Automatgetriebe mit einer abtriebseitigen Anfahrkupplung die aktuelle Motordrehzahl (n_mot_aktuell) in einer rampenartigen Übergangsfunktion in die zulässige maximale Motordrehzahl (n_mot_max_not) überführt wird, wenn die aktuelle Motordrehzahl (n_mot_aktuell) größer als die zulässige maximale Motordrehzahl (n_mot_max_not) ist und der Notfahrbetrieb des Automatgetriebes in einer einen Kraftschluß anfordernden Wählhebelposition erkannt wird.

11. Verfahren nach einem der Ansprüche 1 bis 10, **dadurch gekennzeichnet, daß** ein Motorlüfter mit einer applizierbaren abgesenkten Kühlmitteltemperatur (C_Lüfter_ein_not) betrieben wird oder permanent läuft, wenn der Notfahrbetrieb des Automatgetriebes erkannt wird.

## Claims

1. Method for reducing the thermal load on an automatic transmission of an emergency-controlled motor vehicle, whereby the automatic transmission is controlled by an electronic transmission control system, which in normal operating condition constantly exchanges signals with a digital engine electronics system of an internal combustion engine, and whereby the electronic transmission control system is not operable in the emergency operating mode,
**characterized**
**in that** in the emergency operating mode a transmission-independent program module (M1) of the digital engine electronics, which functions independent of the transmission control unit, specifies an admissible maximum vehicle speed for the emergency operating mode (v_max_not) or an admissible maximum engine speed for the emergency operating mode (n_mot_max_not).

2. Method according to claim 1,
**characterized**
**in that** the admissible maximum vehicle speed for the emergency operating mode (v_max_not) or the admissible maximum engine speed for the emergency operating mode (n_mot_max_not) is specified if the digital engine electronics system recognizes the emergency operating mode for the automatic transmission due to the absence of a signal from the electronic transmission control system signaling normal operating condition.

3. Method according to claim 2,
**characterized**
**in that** the signal from the electronic transmission control system signaling normal operating condition is received by the digital engine electronics system as a CAN signal.

4. Method according to one of the claims 1 - 3,
**characterized**
**in that** a transient response function (F5) for conversion of the current vehicle speed (v_current) to the admissible maximum vehicle speed for the emergency operating mode (v_max_not) or of a current engine speed (n_mot_current) to the admissible maximum engine speed for the emergency operating mode (n_mot_max_not) is started if the current vehicle speed (v_current) exceeds the admissible maximum vehicle speed for the emergency operating mode (v_max_not) or the current engine speed (n_mot_current) exceeds the admissible maximum engine speed for the emergency operating mode (n_mot_max_not).

5. Method according to claim 4,
**characterized**
**in that** the current vehicle speed (v_current) is converted to the admissible maximum vehicle speed for the emergency operating mode (v_max_not) through reduction of the injection volume for the internal combustion engine or through reduction of the throttle valve angle of an internal combustion engine linked to an electronic gas pedal.

6. Method according to claim 4 or 5,
**characterized**
**in that** the current vehicle speed (v_current) or the current engine speed (n_mot_current) is converted through a ramp-like transient response function (F5) to the admissible maximum vehicle speed for the emergency operating mode (v_max_not) or to the admissible maximum engine speed for the emergency operating mode (n_mot_max_not).

7. Method according to one of the claims 4 - 6,
**characterized**
**in that** the transient response function (F5) is preceded by a discrete time stage during which the current vehicle speed (v_current) or the current engine speed (n_mot_current) is not influenced.

8. Method according to one of the claims 1 - 7,
**characterized**
**in that** the electronic transmission control system controls an automatic transmission variator with a torque-transmitting element contacting primary and secondary disk sets, whereby in emergency operating mode the contact pressure control of the secondary disk set is interrupted and a constant static pressure is established between primary and secondary disk sets.

9. Method according to one of the claims 1 -8,
**characterized**
**in that** with an automatic transmission with output-end starting clutch, the current engine speed (n_mot_current) is immediately limited to the admissible maximum engine speed (n_mot_max_not) if the emergency operating mode of the automatic transmission is recognized to be in a selector lever position not requesting engagement for power transmission.

10. Method according to one of the claims 1 - 9,
**characterized**
**in that** with an automatic transmission with output-end starting clutch, the current engine speed (n_mot_current) is converted to the admissible maximum engine speed (n_mot_max_not) through a ramp-like transient response function if the current engine speed (n_mot_current) exceeds the admissible maximum engine speed (n_mot_max_not) and the emergency operating mode of the automatic transmission is recognized to be in a selector position requesting engagement for power transmission.

11. Method according to one of the claims 1 - 10,
**characterized**
**in that** an engine ventilator operates with an applicable, lowered coolant temperature (C_ventilator_on_not) or operates permanently if the emergency operating mode of the automatic transmission is recognized.

## Revendications

1. Procédé pour la réduction de la charge thermique d'une boîte de vitesses automatique pour un véhicule automobile dans un fonctionnement de détresse, dans lequel la boîte de vitesses automatique est commandée par un dispositif de commande électronique de la boîte de vitesses qui, dans un fonctionnement de conduite normal, échange continuellement des signaux avec une électronique numérique d'un moteur à combustion interne, et dans lequel le dispositif de commande électronique de la boîte de vitesses est incapable de fonctionner dans le fonctionnement de détresse, **caractérisé en ce que**, dans le fonctionnement de détresse, un module de programme (M1) de l'électronique numérique du moteur, indépendant de la boîte de vitesses, qui travaille indépendamment du dispositif de commande de la boîte de vitesses, prédétermine comme consigne une vitesse maximale admissible du véhicule pour le fonctionnement de détresse (v_max_mot) ou une vitesse de rotation maximale admissible du moteur pour le fonctionnement de détresse (n_mot_max_not).

2. Procédé selon la revendication 1, **caractérisé en ce que** la vitesse maximale admissible du véhicule pour le fonctionnement de détresse (v_max_mot) ou la vitesse de rotation maximale admissible du moteur pour le fonctionnement de détresse (n_not_max_not) est prédéterminée comme consigne lorsque le fonctionnement de détresse de la boîte de vitesses automatique est détecté par l'électronique numérique du moteur sur la base de l'absence d'un signal du dispositif de commande électronique de la boîte de vitesses qui indique un fonctionnement normal.

3. Procédé selon la revendication 2, **caractérisé en ce que** le signal du dispositif de commande électronique de la boîte de vitesses qui indique un fonctionnement normal se présente à l'électronique numérique du moteur sous la forme d'un signal CAN.

4. Procédé selon l'une des revendications 1 à 3, **caractérisé en ce qu'**une fonction de transfert (F5) pour la conversion d'une vitesse actuelle du véhicule (v_aktuell) en la vitesse maximale admissible du véhicule pour le fonctionnement de détresse (v_max_mot) ou d'une vitesse de rotation actuelle du moteur (n_mot_aktuell) en la vitesse de rotation maximale du moteur pour le fonctionnement de détresse (n_mot_max_not) est mise en jeu lorsque la vitesse actuelle du véhicule (v_aktuell) est supérieure à la vitesse maximale admissible du véhicule pour le fonctionnement de détresse (v_max_not) ou que la vitesse de rotation actuelle du moteur (n_mot_aktuell) est supérieure à la vitesse de rotation maximale admissible du moteur pour le fonctionnement de détresse (n_mot_max_not).

5. Procédé selon la revendication 4, **caractérisé en ce que** la vitesse actuelle du véhicule (v_aktuell) est convertie en la vitesse maximale admissible du véhicule pour le fonctionnement de détresse (v_max_not) par une réduction d'une quantité d'injection du moteur à combustion interne ou par une réduction d'un angle du volet des gaz du moteur à combustion interne qui est en liaison effective avec une pédale d'accélérateur électronique.

6. Procédé selon la revendication 4 ou 5, **caractérisé en ce que** la vitesse actuelle du véhicule (v_aktuell) ou la vitesse de rotation actuelle du moteur (n_mot_aktuell) est convertie en la vitesse maximale admissible du véhicule pour le fonctionnement de détresse (v_max_not) ou en la vitesse de rotation maximale admissible du moteur pour le fonctionnement de détresse (n_mot_max_not) par une variation en rampe dans la fonction de transfert (F5).

7. Procédé selon l'une des revendications 4 à 6, **caractérisé en ce qu'**en amont de la fonction de transfert (F5) est intercalée une étape de temps discrète pendant laquelle la vitesse actuelle du véhicule (v_aktuell) ou la vitesse de rotation actuelle du moteur (n_mot_aktuell) n'est pas influencée.

8. Procédé selon l'une des revendications 1 à 7, **caractérisé en ce que** le dispositif de commande électronique de la boîte de vitesses pilote un variateur de la boîte de vitesses automatique qui comprend un ensemble poulie primaire, un ensemble poulie secondaire et un organe de transmission du couple qui embrasse ces deux ensembles, une régulation de la pression de serrage de l'ensemble poulie secondaire étant interrompue et une condition de pression statique constante étant établie entre l'ensemble poulie primaire et l'ensemble poulie secondaire dans le fonctionnement de détresse.

9. Procédé selon l'une des revendications 1 à 8, **caractérisé en ce que**, dans le cas d'une boîte de vitesses automatique comprenant un embrayage de démarrage côté sortie, la vitesse de rotation actuelle du moteur (n_mot_aktuell) est limitée à la vitesse de rotation maximale admissible du moteur (n_mot_max_not) dès que le fonctionnement de détresse de la boîte de vitesses automatique est détecté dans une position du levier sélecteur qui ne demande pas de transmission de force.

10. Procédé selon l'une des revendications 1 à 9, **caractérisé en ce que**, dans le cas une boîte de vitesses automatique comprenant un embrayage de démarrage côté sortie, la vitesse de rotation actuelle du moteur (n_mot_aktuell) est convertie, dans une fonction de transfert en rampe, en la vitesse de rotation maximale admissible du moteur (n_mot_max_not) lorsque la vitesse de rotation actuelle du moteur (n_mot_aktuell) est supérieure à la vitesse de rotation maximale admissible du moteur (n_mot_max_not) et que le fonctionnement de détresse de la boîte de vitesses automatique est détecté dans une position du levier sélecteur qui demande une transmission de force.

11. Procédé selon l'une des revendications 1 à 10, **caractérisé en ce qu'**un ventilateur du moteur est mis en action avec une température du fluide de refroidissement abaissée applicable (C_Lüfter_ein_not) ou fonctionne en permanence lorsque le fonctionnement de détresse de la boîte de vitesses automatique est détecté.
